Europäisches Patentamt

(19) European Patent Office

Office européen des brevets

(11) Publication number: **0 459 671 A2**

(12) # EUROPEAN PATENT APPLICATION

(21) Application number: **91304508.4**

(22) Date of filing: **20.05.91**

(51) Int. Cl.⁵: **G03B 21/11**

(30) Priority: **29.05.90 US 530043**

(43) Date of publication of application:
**04.12.91 Bulletin 91/49**

(84) Designated Contracting States:
**BE DE FR GB IT NL**

(71) Applicant: **MOBIL OIL CORPORATION**
**3225 Gallows Road**
**Fairfax, Virginia 22037-0001 (US)**

(72) Inventor: **Green, Marvin D.**
**303 N. 71st Street**
**Kansas City, Kansas 66112 (US)**

(74) Representative: **Curtis, Philip Anthony et al**
**Patent Department, Mobil Court 3 Clements Inn**
**London WC2A 2EB (GB)**

(54) **Method and apparatus for the removal of film strip material from a plurality of film reels or reel cartridges.**

(57)  An apparatus for simultaneously removing strips of film material from a plurality of film reels or reel cartridges. The apparatus comprises a frame ; an elongated film strip take-up spindle for simultaneously advancing and winding thereupon the strips of film material, the take-up spindle rotatably mounted to the frame ; means for rotating the take-up spindle ; means for securing a plurality of film reels or cartridges while the strips of film material are being removed therefrom ; and a film strip guide for maintaining a spaced relationship between adjacent strips of film material as the strips are being removed from the film reels or reel cartridges.

EP 0 459 671 A2

The present invention relates to a method and apparatus for the removal of film material from film reels or reel cartridges and, more particularly, to a method and apparatus for simultaneously removing film from microfilm reels or cartridges.

In the operation of many businesses, organizations and governmental agencies, the storage on microfilm of records, computer-generated printouts, and the like is often required due to space considerations. As is the case in many large businesses, the storage of vast quantities of such records on microfilm can also pose a problem from the standpoint of storage space. In most organizations, the time often comes when the need to store certain records passes and those microfilm records can thus be discarded. Although the reels or reel cartridges containing the no longer needed microfilm records can be discarded together with the film, the reels or reel cartridges still possess economic value and, if stripped of such film, can be sold. Despite the fact that these reels and cartridges have economic value, the stripping and recovery of same is labor intensive, which greatly reduces the realization potential of the recycling operation.

Therefore what is needed is a method and apparatus which enhances the efficiency of removing film strip material, such as microfilm, from reels or reel cartridges.

In accordance with the present invention, there is provided an apparatus for simultaneously removing strips of film material from a plurality of film reels or reel cartridges. The apparatus comprises a frame; an elongated film strip take-up spindle for simultaneously advancing and winding thereupon the strips of film material, the take-up spindle rotatably mounted to the frame; means for rotating the take-up spindle; means for securing a plurality of film reels or cartridges while the strips of film material are being removed therefrom; and a film strip guide for maintaining a spaced relationship between adjacent strips of film material as the strips are being removed from the film reels or reel cartridges.

Also provided is a method for simultaneously removing strips of film material from a plurality of film reels or reel cartridges, comprising the steps of loading the plurality of film reels or reel cartridges into an apparatus for simultaneously removing strips of film material from film reels or reel cartridges; and simultaneously advancing each strip of film material from each film reel or reel cartridge until essentially all film material has been removed from each film reel or reel cartridge.

The method and apparatus of the invention enhances the efficiency of removing film material, is easy to operate, and is low cost.

Reference is now made to the accompanying drawings in which :

Fig. 1 is a side plan view of an apparatus for the simultaneous removal of strips of film material from a plurality of film reels or reel cartridges in accordance with the present invention.

Fig. 2 is a front plan view of the apparatus of Fig. 1 showing a plurality of strips of film material in position for removal from their respective reels.

Fig. 3 is a rear plan side view of the apparatus of Fig. 1 showing the drive mechanism of that embodiment in greater detail.

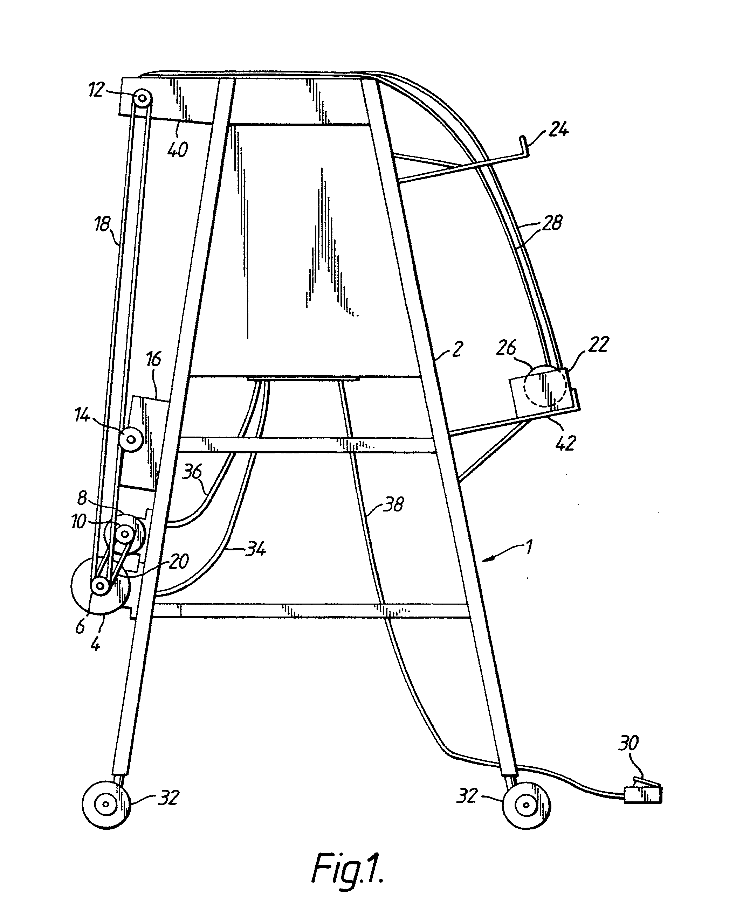

The present invention is best understood by reference to the appended figures, which are given by way of example and not of limitation. Referring now to Fig. 1, a side plan view of an apparatus in accordance with the present invention is shown. As may be seen, apparatus 1, includes frame 2, which can optionally be fitted with casters 32 for portability. As is preferred, frame 2 can be constructed to have a substantially A-frame-like structure, although other structural configurations are suitable in the practice of the present invention. Frame 2 may be constructed from aluminum angle stock, steel, wood and the like, as those skilled in the art will plainly recognize. Optional shelf 42 may be mounted on the front side of apparatus 1 and used to support means 22 for securing a plurality of film reels or cartridges 26. Reel or cartridge securing means 22 can be a simple box-like structure of a size and shape suitable for securing a plurality of the film reels or cartridges 26. As will be appreciated, reel or cartridge securing means 22 can also be remotely located, for example on a nearly table, its physical location not being critical to the operation of the apparatus of the present invention.

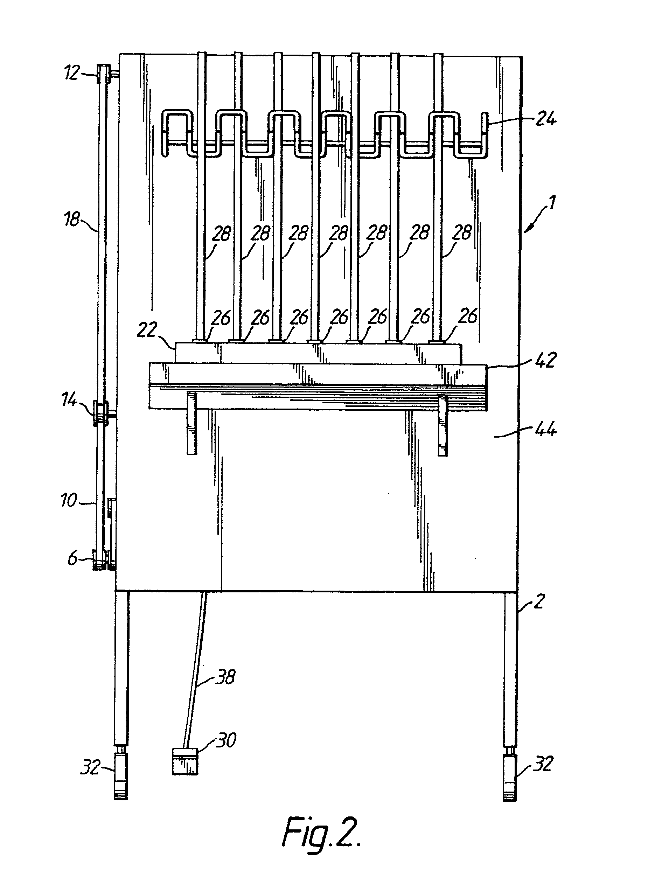

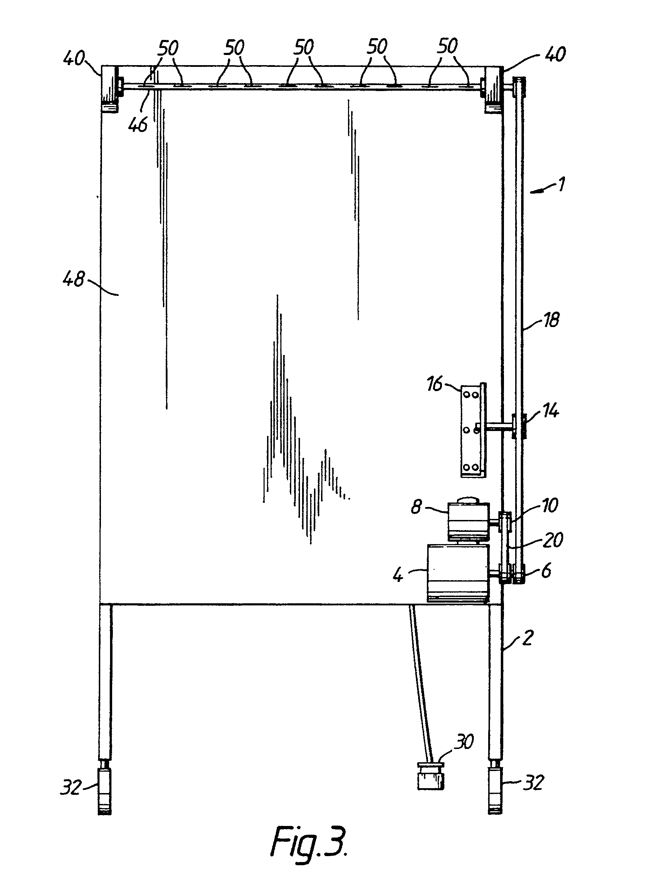

As may be envisioned from Fig. 1, in the operation of apparatus 1, strips of film material 28 are extracted from their respective reels or reel cartridges 26, pulled upward through film strip guide 24 over the top of apparatus 1 and advanced and wound upon elongated film strip take-up spindle 46 (see Figure 3). The take-up spindle 46 is rotatably mounted to arms 40 of frame 2. As better shown by reference to Fig. 2, film strip guide 24 serves to maintain a spaced relationship between adjacent strips of film material 28 as strips thereof are being removed from their respective reels or reel cartridge 26.

The operation of the present invention requires means for rotating take-up spindle 46. While several systems can effectively be employed in the practice of the present invention, a preferred system is one which comprises at least one electric motor, and a pulley and belt drive arrangement. One such system is shown in Figs. 1 through 3. The system depicted in Figs. 1 through 3 employs a dual electric motor arrangement wherein motor 4 and motor 8 are linked together by drive belt 20. Motor 4 and motor 8 can advantageously operate on 115 volts AC. While the power rating of the motor or motors can vary depending upon particular operating needs, the motors employed in the dual motor arrangement depicted in Figs. 1 through 3 each have a power rating of approximately 1/15 of a horsepower (50 W). As shown in Fig. 1, drive belt 18 connects pulley 6 of motor 4 with pulley 12 of take-up spindle 46. Tension pulley 14, mounted upon frame 2 using bracket 16, functions to maintain proper drive belt tension during operation and permits the tension to be adjusted as belt wear is experienced with use.

Referring now to Fig. 2, a front plan view of the embodiment of Fig. 1 is shown. As may be seen, a plurality of strips of film material 28 are in position for removal from their respective reels or reel cartridges 26. The optional shelf 42 is shown mounted on a lower portion of front panel 44 of frame 2, with the reel or cartridge securing means 22 installed directly thereon. Also mounted upon front panel 44 of frame 2, above film reel or cartridge securing means 22, is the film strip guide 24. As mentioned, film strip guide 24 serves to maintain a spaced relationship between adjacent strips of film material 28 as strips thereof are being removed from film reels or reel cartridges 26. Film strip guide 24 may be a rack-type structure resembling a wire shelving rack, such as is shown in Fig. 1 and Fig. 2, or be of some other type of configuration and construction suited to its stated purpose.

Referring now to Fig. 3, a rear plan view of the Fig. 1 embodiment is presented. Shown mounted is an upper portion of apparatus 1 is elongated film strip take-up spindle 46. Take-up spindle 46 is rotatably mounted to arms 40 of frame 2. Advantageously, take-up spindle 46 may be fabricated or machined to have a plurality of slots 50 which aid in affixing the strips of film material 28 thereto. As can be appreciated, the number of slots 50 machined into take-up spindle 46 need not correspond directly to the number or feels or reel cartridges 26 which apparatus 1 can strip in one operation, since a single slot 50 running along a substantial length of take-up spindle 46 would certainly be effective. Moreover, the provision of slots 50 is clearly optional since other forms of affixing the strips of film 28 would be satisfactory. For example, the ends of film strips 28 could be taped to take-up spindle 46 or, alternatively, a sufficient length of each film strip 28 could be tightly hand-wound onto take-up spindle 46.

Mounted on a lower portion or rear panel 48 of frame 2 is the means employed for rotating take-up spindle 46, which, as is preferred and indicated above, is an electric motor and pulley and belt-drive system. It is to be understood that although two motors are shown in Fig. 3, a single motor of sufficient power would perform satisfactorily in the apparatus of the present invention. Additionally, it is advantageous to employ a motor speed controller in the practice of the present invention. Such a controller may be selected from any of the well-known solid-state electronic varieties commonly employed in like applications. Preferred for use in the practice of the present invention is the pedal-operated speed controller 30 shown in Figs. 1 through 3. Such a controller enables the operator to have his or her hands free for the performance of other tasks while operating the apparatus of the present invention.

Although a particular drive system has been described for use in rotating take-up spindle 46, other system are known to have utility in this application. One such system, not shown, utilizes an electric motor and, rather than a pulley and belt system, a simple rubber-whelled capstan system. Also although motorized units have been of primary focus in this description, a hand-cranked version is also considered to be within the scope of the present invention.

The following non-limiting example is illustrative of the benefits accruing from the practice of the present invention.

EXAMPLE

An apparatus substantially as herein disclosed was designed and fabricated using two electric motors (1/15 horsepower (50 W), 115 volts AC) an electric relay and two electric switches and a foot pedal for operating a variable speed motor controller. The frame fabricated for this application was a metal A-frame, having a height of 56 inches (1.42m) and a width of 24 (0.61 m) inches. Unlike the version depicted in the appended figures, shelf 42 (see Fig. 2) was omitted and the means employed for securing a plurality of reels or reel cartridges was a metal box-like structure. The apparatus so built, when operated by one person, easily handles the stripping of film from 10 to 15 reel cartridges at a time.

To strip microfilm from a plurality of microfilm cartridges, 15 cartridges were loaded into the metal box employed to hold the cartridges steady and secure during the stripping process. The metal box containing the cartridges was placed on a nearby table for support. The microfilm from each cartridge was extracted, threaded through the film strip guide, draped over the top of the apparatus and affixed to the take-up spindle. When all microfilm strips were so affixed, the operator turned the power to the two electric motors on and actuated the foot control pedal to begin the stripping process. Within five minutes, all cartridges were stripped of microfilm and the microfilm so stripped removed from the apparatus and discarded.

## Claims

1. An apparatus for simultaneously removing strips of film material from a plurality of film reels or reel cartridges, comprising:

   (a) a frame;

   (b) an elongated film strip take-up spindle for simultaneously advancing and winding thereupon the strips of film material, said take-up spindle being rotatably mounted to said frame;

   (c) means for rotating said take-up spindle;

   (d) means for securing a plurality of film reels or cartridges while the strips of film material are being removed therefrom; and

   (e) a film strip guide for maintaining a spaced relationship between adjacent strips of film material as the strips are being removed from the film reels or reel cartridges.

2. Apparatus according to claim 1, wherein said film strip guide is mounted upon said frame above said film reel or cartridge securing means.

3. Apparatus according to claim 1 or 2, wherein said means for rotating said take-up spindle comprises a first electric motor and a pulley and belt-drive system.

4. Apparatus according to claim 3, wherein said means for rotating said take-up spindle further comprises a second electric motor rotatably connected to said first electric motor.

5. Apparatus according to claim 3 or 4, wherein said means for rotating said take-up spindle further comprises a motor speed controller.

6. Apparatus according to claim 5, wherein said motor speed controller is foot pedal operated.

7. Apparatus according to any preceding claim, wherein said frame comprises a four-legged A-frame structure.

8. Apparatus according to claim 7, wherein said frame further comprises a shelf for mounting said means for securing a plurality of film reels or cartridges thereon.

9. A method for simultaneously removing strips of film material from a plurality of film reels or reel cartridges, comprising the steps of:

   (a) loading the plurality of film reels or reel cartridges into an apparatus for simultaneously removing strips of film material from film reels or reel cartridges; and

   (b) advancing simultaneously each strip of film material of each film reel or reel cartridge loaded in step (a) until essentially all film material has been removed from each film reel or reel cartridge.

10. The method of claim 9, wherein the apparatus for simultaneously removing strips of film material from film reels or reel cartridges comprises any apparatus according to any one of Claims 1 to 8.

Fig.1.

Fig.2.

Fig.3.